(19) Europäisches Patentamt
European Patent Office
Office européen des brevets

(11) **EP 1 919 064 B1**

(12) **EUROPEAN PATENT SPECIFICATION**

(45) Date of publication and mention
of the grant of the patent:
**16.08.2017 Bulletin 2017/33**

(51) Int Cl.:
*H02M 1/15* *(2006.01)*      *H02M 7/217* *(2006.01)*
*H02M 1/00* *(2007.01)*      *H02M 1/42* *(2007.01)*

(21) Application number: **07021217.0**

(22) Date of filing: **30.10.2007**

(54) **Power supply circuit and control circuit for use in the same**

Stromversorgungsschaltung und Steuerung dafür

Circuit d'alimentation électrique et circuit de contrôle

(84) Designated Contracting States:
**DE FR GB**

(30) Priority: **31.10.2006 JP 2006295535**

(43) Date of publication of application:
**07.05.2008 Bulletin 2008/19**

(73) Proprietor: **Johnson Controls-Hitachi Air
Conditioning
Technology (Hong Kong) Limited
Hong Kong (CN)**

(72) Inventors:
• **Notohara, Yasuo**
  **Tokyo 100-8220 (JP)**
• **Tamura, Kenji**
  **Shimotsuga-gun,**
  **Tochigi 329-4493 (JP)**
• **Funayama, Yuuji**
  **Shimotsuga-gun,**
  **Tochigi 329-4493 (JP)**
• **Okuyama, Atsushi**
  **Shimotsuga-gun,**
  **Tochigi 329-4493 (JP)**
• **Umeda, Hiroki**
  **Tokyo 100-8220 (JP)**

(74) Representative: **Puschmann Borchert Bardehle
Patentanwälte Partnerschaft mbB
Postfach 10 12 31
80086 München (DE)**

(56) References cited:
**JP-A- 2 261 059**

• **JUNYANG LUO ET AL: "A new continuous
conduction mode PFC IC with average current
mode control" POWER ELECTRONICS AND
DRIVE SYSTEMS, 2003. PEDS 2003. THE FIFTH
INTERN ATIONAL CONFERENCE ON
SINGAPORE 17-20 NOV. 2003, PISCATAWAY, NJ,
USA,IEEE, PISCATAWAY, NJ, USA, vol. 2, 17
November 2003 (2003-11-17), pages 1110-1114,
XP010694313 ISBN: 978-0-7803-7885-8**
• **NOON J P ET AL: "Practical design issues for PFC
circuits" APPLIED POWER ELECTRONICS
CONFERENCE AND EXPOSITION, 1997. APEC
'97 CO NFERENCE PROCEEDINGS 1997.,
TWELFTH ANNUAL ATLANTA, GA, USA 23-27
FEB. 1997, NEW YORK, NY, USA,IEEE, US, vol. 1,
23 February 1997 (1997-02-23), pages 51-58,
XP010215800 ISBN: 978-0-7803-3704-6**

**Description**

The present invention relates to power supply circuits and control circuits for use therein, for converting an AC voltage to a boosted DC voltage.

There are widely used power supply circuits for improving power factor of a single phase AC power supply or suppress harmonic current. Among these, power supply circuits using a boost chopper circuit which includes reactors, switching elements and diodes have simple circuit and control configurations, and are therefore used for a power supply for an inverter controlled apparatus (such as an inverter air conditioner) which does not require regeneration to the power supply.

There have been many reports of methods using a boost chopper circuit for improving power factor or suppressing harmonic current. Among these, the Japanese Patent Laid-open Publication No. Hei 01 (1989)-114372 discloses a scheme (hereinafter referred to as "basic scheme") for controlling an input current to have a sinusoidal waveform synchronized with a power supply voltage only by using a power supply current instantaneous value and proportional gain without the need of detecting any reference value such as a sinusoidal current command waveform or power supply phase.

The Japanese Patent No. 2809463 and the Japanese Patent No. 2796340 disclose a technology to which the scheme of the Japanese Patent Laid-open Publication No. Hei 01 (1989)-114372 is applied. The Japanese Patent 2809463 discloses a method in which, in order to solve a problem of increased DC voltage ripple component with decreasing smoothing capacitance, the duty ratio of the switching device of a boost chopper circuit is corrected using the DC voltage ripple component thereof, thereby reducing the DC voltage ripple component. More specifically, the DC voltage ripple component is added to the duty ratio signal to perform the correction. This method can allow use of a smoothing capacitor of a relatively low capacitance, thereby achieving cost reduction. The Japanese Patent No. 2796340 discloses a boosting ratio stabilization control method which stops switching operation near the peak of an input current in order to increase the efficiency of a boost chopper circuit.

The Japanese Patent Laid-open Publication No. Hei 01(1989)-114372 and the Japanese Patent No. 2809463 basically performs the switching operation at every cycle of the power supply, but such a switching scheme has a problem of increased switching loss and reduced circuit efficiency. To overcome this, the boosting ratio stabilization control method stops switching operation near the peak of an input current while still using the above basic scheme (not detecting any reference value such as a sinusoidal current command waveform or power supply phase), thereby reducing switching loss.

Hence, the basic scheme and its application technologies are an excellent method capable of controlling a boost chopper circuit using a simple configuration.

The technology of the Japanese Patent No. 2796340 is an excellent method which stops switching operation near the peak of an input current while not detecting any reference value such as a sinusoidal current command waveform or power supply phase, but it still has a problem in that there occurs a distortion near the zeros of an input current waveform as there increases the power consumption of a load connected to the output (the DC voltage output) of the power supply circuit.

Further, although this method can reduce switching loss by stopping switching operation near the peak of an input current, it cannot achieve any further significant loss reduction (efficiency improvement).

Thus, the technologies described in the above-mentioned patent documents provide only limited solutions to the problem of distortion in input current waveform at higher input current levels and the demand for further loss reduction.

In JUNYANG LUO ET AL: "A new continuous conduction mode PFC IC with average current mode control" POWER ELECTRONIGS AND DRIVE SYSTEMS, 2003. PEDS 2003. THE FIFTH INTERN ATIONAL CONFERENGE ON SINGAPORE 17-20 NOV. 2003, PISGATAWAY, NJ, USA,IEEE, PISCA T AW A Y, NJ, USA, val. 2, 17 November 2003 (2003-11-17), pages 11101114, XP01 0694313 ISBN: 978-0-7803-7885-8, a new continuous conduction mode (CCM) PFC controller, named ICEIPCS01. is disclosed based on a new control scheme. Compared to the conventional PFC solution, the new IC does not need the direct sine-wave sensing reference signal from the AC mains. Average current control is implemented to achieve the unity power factor. Enhanced dynamic response is introduced to improve the poor behaviour during sudden load jump. A unique soft start is adopted to prevent high inrush current during start up. There are also various protections to ensure the safe system operation. The IC operation is described and the test results are presented.

According to NOON J P ET AL: "Practical design issues for PFC circuits" APPLIED POWER ELECTRONICS CONFERENCE ANO EXPOSITION, 1997. APEC '97 CO NFERENCE PROCEEOINGS 1997., TWELFTH ANNUAL ATLANTA, GA, USA 23-27 FEB. 1997, NEW YORK, NY, USA,IEEE, US, vol. 1,23 February 1997 (1997-02-23), pages 51-58, XP01 0215800 ISBN: 978-0-7803-3704-6 , many difficult design issues are faced by designers trying to optimize the performance of boost PFC circuits. This paper addresses common design challenges and provides analytical techniques for developing practical solutions. The issues covered include line filtering, Joop compensation alternatives, input voltage feed forward, protection circuits and synchronization.

The object of the present invention is to provide a power supply circuit and a control circuit for use therein, capable of reducing distortion in input current waveform and reducing switching loss.

In order to solve the above problems, a power supply circuit according to the present invention comprises the features of claim 1.

Preferred embodiments of the invention are characterized in the sub-claims.

More specifically, in preferred embodiments of the invention, a DC voltage ripple component is subtracted from the duty ratio signal of a switching element of the boost chopper circuit calculated using the above-described boosting ratio stabilization control scheme, thereby improving input current waveform distortion. In addition, the switching is stopped or operated at a fixed duty ratio based on the DC voltage ripple component information, thereby reducing switching loss.

Embodiments of the invention are now described with reference to the drawings.

Fig. 1 is a block diagram of a power supply circuit according to a first embodiment of the present invention.

Fig. 2 is a block diagram of a control algorithm according to the first embodiment of the present invention.

Fig. 3 is operating waveforms obtained by using the technology of the Japanese Patent No. 2809463.

Fig. 4 is operating waveforms of a power supply circuit according to the first embodiment of the present invention.

Fig. 5 is an outline drawing of an example of a control circuit used for a power supply circuit according to the first embodiment of the present invention.

Fig. 6 is a block diagram of a power supply circuit according to a second embodiment of the present invention.

Fig. 7 is a characteristic drawing to show a relationship between motor rotational speed, boosting ratio and DC voltage.

Fig. 8 is an outline drawing of an example of a power supply circuit according to the second embodiment of the present invention.

Fig. 9 is a block diagram of a control algorithm according to a third embodiment of the present invention.

Fig. 10 is operating waveforms of a power supply circuit according to the third embodiment of the present invention.

Fig. 11 is a block diagram of a control algorithm according to a fourth embodiment of the present invention.

Fig. 12 is a block diagram of another control algorithm according to the fourth embodiment of the present invention.

Fig. 13 is a block diagram of other control algorithm according to the fourth embodiment of the present invention.

Fig. 14 is a characteristic drawing to show an operation of a fifth embodiment of the present invention.

Fig. 15 is a drawing to show an operational principle of a sixth embodiment of the present invention.

First Embodiment

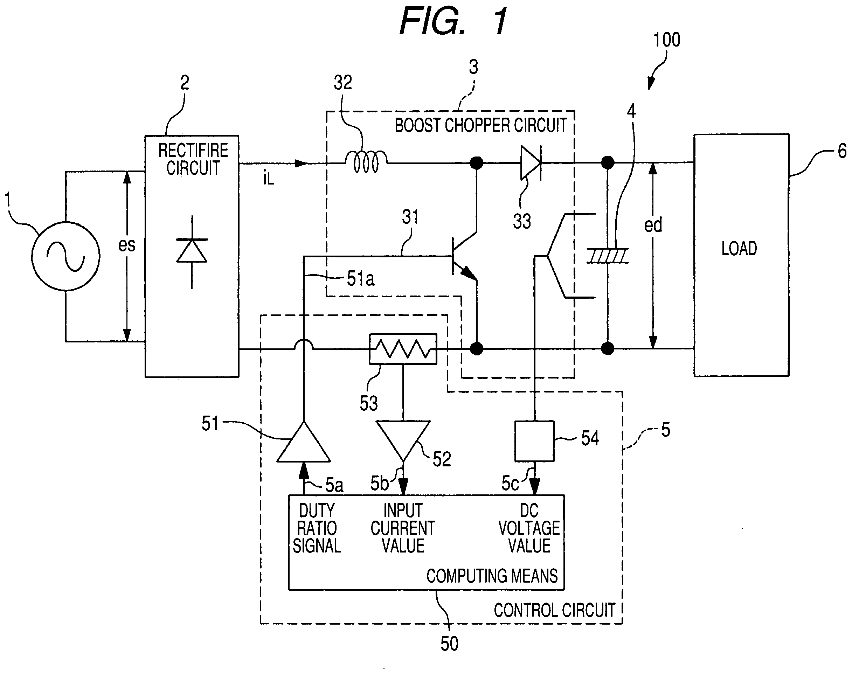

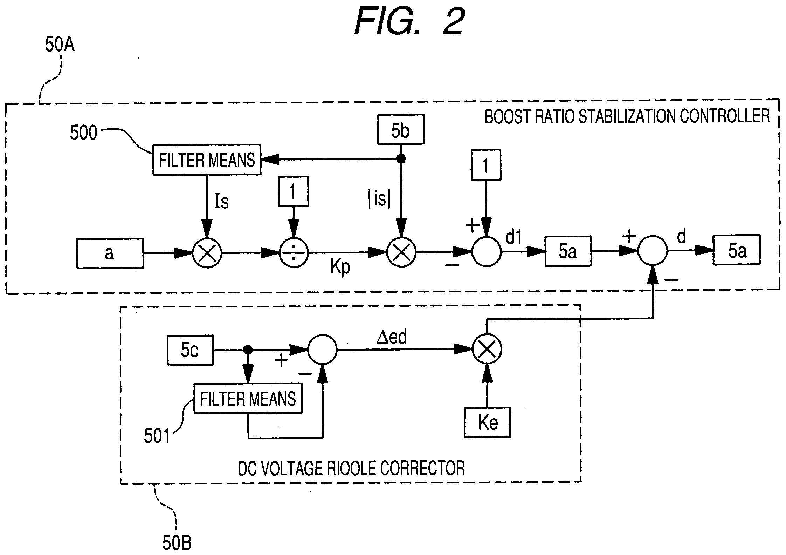

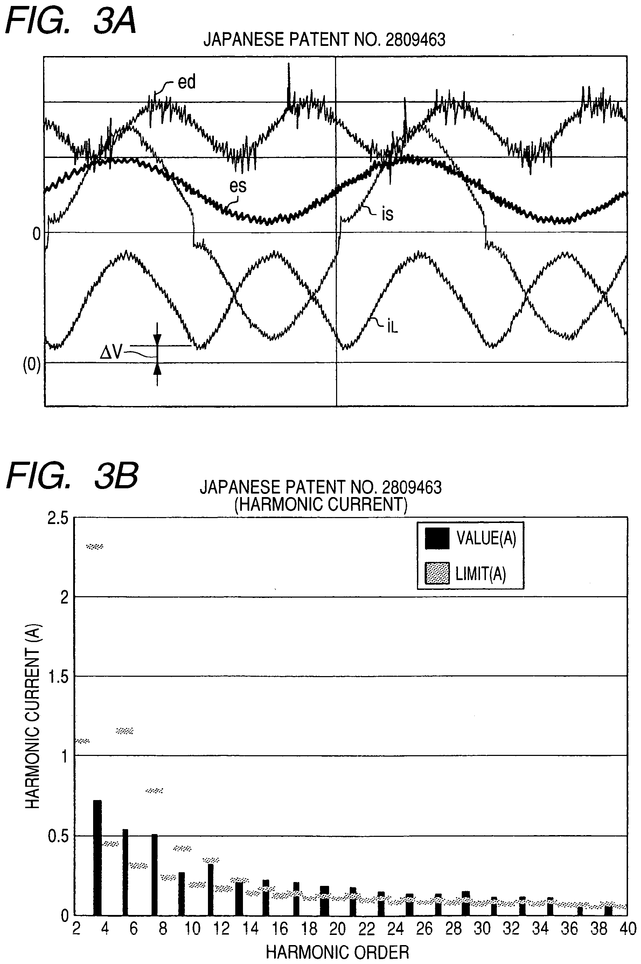

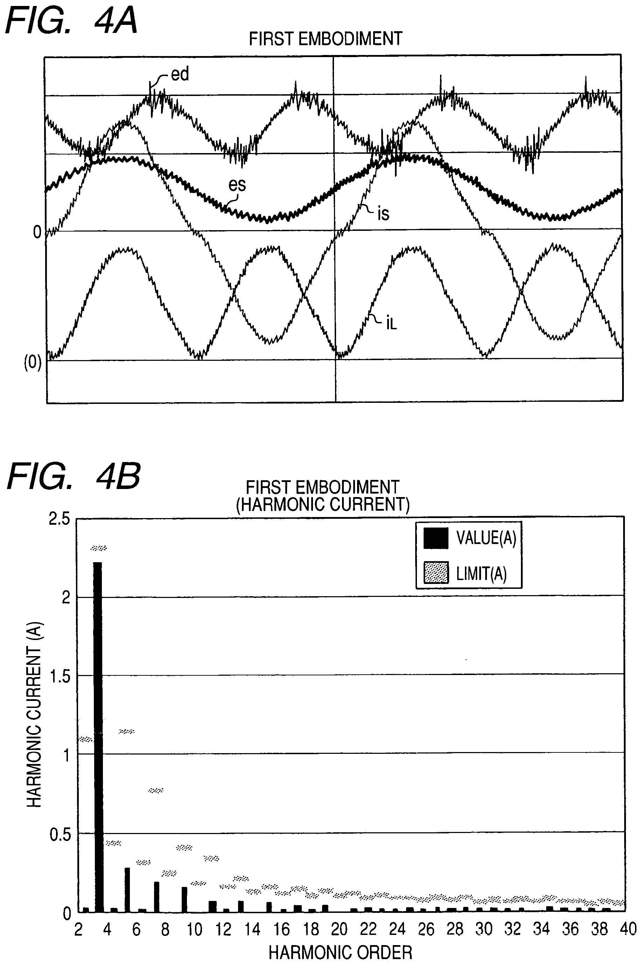

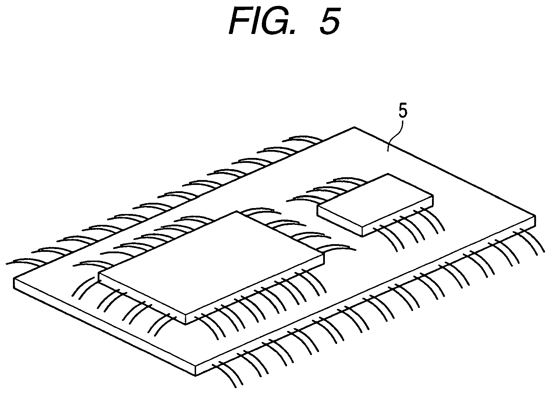

A first embodiment of the present invention will be described with reference to Figs. 1 to 5. Fig. 1 is a block diagram of a power supply circuit according to a first embodiment of the invention; Fig. 2 is a block diagram of a control algorithm in the first embodiment; Figs. 3 and 4 are operating waveforms of power supply circuits; and Fig. 5 is an outline drawing of an example of a control circuit used for the power supply circuit in the first embodiment.

First, a configuration and operation of the power supply circuit will be described with reference to Fig. 1. A power supply circuit 100 includes: a rectifier circuit 2 connected to an AC power supply 1 and receiving an AC voltage es as an input; a boost chopper circuit 3; a smoothing capacitor 4; and a control circuit 5, and supplies a DC power to a load 6 connected to the smoothing capacitor 4.

The boost chopper circuit 3 includes: a reactor 32 with one end connected to the rectifier circuit 2; a diode 33 with its anode connected to the other end of the reactor 32; and a switching element 31 for short circuiting the other end of the reactor 32, in which the switching operation of the switching element 31 and the energy storage function of the reactor 32 are utilized to boost the input voltage, and the resulting boosted voltage is applied to the smoothing capacitor 4. Here, the switching element 31 is a self-erasing device such as a transistor and an IGBT, and is driven by a drive signal 51a from the control circuit 5.

The control circuit 5 includes: a power supply current detector; a DC voltage detector 54; computing means 50; and a driver circuit 51. The power supply current detector serving as means for generating input current information uses a shunt resistance 53 and amplifier 52 to detect a reactor current $i_L$ flowing into the boost chopper circuit 3 and output an input current value 5b. Here, the input current of the rectifier circuit 2 is full-wave rectified to provide the reactor current $i_L$, and it follows therefore that the input current value 5b substantially measures the current flowing into the rectifier circuit 2. The DC voltage detector 54 detects a DC voltage ed across the terminals of the smoothing capacitor 4 and outputs a DC voltage value 5c, which is obtained, for example, by dividing the detected DC voltage ed using a resistive divider. The computing means 50 computes a duty ratio signal 5a for controlling the switching element 31 based on the input current value 5b and DC voltage value 5c. The driver circuit 51 amplifies the duty ratio signal 5a and outputs the drive signal 51a for driving the switching element 31.

The computing means 50 uses a semiconductor computing device typified by a single chip microcomputer (hereinafter referred to as "microcomputer"), and the input current value 5b and DC voltage value 5c are converted to digital values by an A/D converter contained in the microcomputer for computation by the microcomputer. The duty ratio signal 5a is transformed to a PWM pulse signal generated using a PWM timer contained in the microcomputer. Although the present embodiment is described with reference to a digital processing system using a microcomputer, it may also employ an analog computing circuit including transistors, operational amplifiers, comparators, etc.

Next, computations performed in the computing means 50 will be described with reference to Fig. 2. Only a computation for determining the duty ratio signal 5a using the input current value 5b and DC voltage value 5c is described, and the description of a computation for generating the PWM pulse signal from the thus determined duty ratio signal 5a using the PWM timer is omitted because it is a function of the microcomputer.

The control block diagram of Fig. 2 includes a boosting ratio stabilization controller 50A and a DC voltage ripple corrector 50B which is a configuration feature of the invention.

The boosting ratio stabilization controller 50A includes: a "basic scheme" for controlling the input current waveform to have a sinusoidal waveform synchronized with the power supply voltage using the product of an input current instantaneous value |is| (absolute value) and proportional gain Kp without the need of detecting any reference value such as a sinusoidal waveform current command and power supply phase; and a "boosting ratio stabilization scheme" for stopping the switching operation near the peak of the input current in order to reduce the switching loss.

The basic scheme and boosting ratio stabilization scheme will now be described briefly.

Turning to Fig. 1, let L, vs and ed be the inductance of the reactor 32, the AC voltage (instantaneous value) of the AC power supply 1 and the DC voltage (instantaneous value) across the terminals of the smoothing capacitor 4, respectively. Then, $i_{ON}$ and $i_{OFF}$ can be expressed by Equation (1) below, where $i_{ON}$ and $i_{OFF}$ denote the input currents (instantaneous value) flowing during the ON and OFF periods of the switching element 31 respectively.

$$i_{ON} = \int \frac{v_S}{L} dt \qquad i_{OFF} = \int (\frac{v_S - e_D}{L}) dt \qquad \cdots\cdots\cdots\cdots\cdots\cdots (1)$$

And, the current change per switching cycle is expressed by:

$$dis/dt = 1/L \, (vs - e_D \frac{t_{OFF}}{t_{ON} + t_{OFF}}) \qquad \cdots\cdots\cdots\cdots\cdots\cdots (2)$$

This gives the following equation for the input current "is" (instantaneous value):

$$is = 1/L \, \int \{vs - (1-d)e_D\} dt \qquad \cdots\cdots\cdots\cdots\cdots\cdots (3)$$

where d is the duty ratio (the ratio of the ON period to the total switching period) of the switching element 31.

Here, assume that Equation (4) below is satisfied:

$$d = 1 - Kp \cdot |is| \qquad \cdots\cdots\cdots\cdots\cdots\cdots (4)$$

where the value 1 in the first term corresponds to a duty ratio of 100%; and Kp is the current control gain.

And further assume vs = Vm·sin(ωt), then one obtain:

$$i_s = \frac{V_m}{L} \frac{1}{\omega^2 + \alpha^2} (\alpha \sin \omega t - \cos \omega t) + \bar{I}_\alpha e^{-\alpha t} \qquad \cdots\cdots\cdots\cdots (5)$$

Assume, for example, that L = 0.3 mH, Ed = 150 to 300 V, and Kp = 0.1 to 0.8, then α = 50000 to 80000, and Equation (5) can be approximated by:

$$is = (\sqrt{2}) \, Vs \cdot \sin \omega t / (Kp \cdot Ed) \qquad \cdots\cdots\cdots\cdots (6)$$

where Vs, Ed and ω are the power supply voltage (effective value), the DC voltage (average value) and electric angular frequency, respectively.

As can be seen from Equation (6), the input current "is" can have a sinusoidal wave synchronized with the power supply voltage Vs without the need of using any reference waveform such as a power supply voltage waveform. This is the fundamental principle of the basic scheme.

In the basic scheme, the proportional gain Kp can be determined from the DC voltage deviation to control the DC voltage Ed (average value).

Rearrange Equation (6) to solve for the boosting ratio instantaneous value, then one obtain:

$$Kp \cdot is = (\sqrt{2}) Vs \cdot \sin\omega t / Ed \qquad \cdots\cdots\cdots (7)$$

By using this equation, a boosting ratio effective value "a" can be expressed as:

$$Kp \cdot is = 1 / a \qquad \cdots\cdots\cdots\cdots\cdots\cdots\cdots\cdots\cdots (8)$$

where "Is" is the input current (effective value). Therefore, the DC voltage Ed (average value) can be controlled to be "a" times the power supply voltage Vs (effective value) by controlling Kp·Is to be constant.

Based on the above method, the duty ratio signal d1 can be given by:

$$d1 = 1 - Kp \cdot |is| \quad , Kp = 1 / (a \cdot is) \qquad \cdots\cdots (9)$$

In other words, when the input current |is| exceeds a·Is, the duty ratio signal d1 becomes 0% and the switching operation stops. Thus, the chopper operation for providing the input current waveform stops near the peak of the power supply voltage (the region where the input current exceeds a·Is), thereby achieving reduction in the switching loss. This is the fundamental principle of the boosting ratio stabilization scheme.

By performing the control operation described above, the input current waveform can be controlled to have a sinusoidal waveform synchronized to the power supply voltage by using the input current instantaneous value and proportional gain without the need of detecting any reference value such as a current command sinusoidal waveform or power supply phase, and, in addition, the switching operation can be stopped near the peak of the input current.

The functions of Equations (1) to (9) are embodied in the boosting ratio stabilization controller 50A of the block diagram of Fig. 2. Although, the control uses the input current Is (effective value) which is obtained by filtering the input current value 5b at filter means 500, it may instead use the mean value of the input current. Further, the boosting ratio "a" uses a predetermined value. However, the configuration may naturally be such that the boosting ratio is changeable during the switching operation.

In this block diagram, the duty ratio signal d is computed according to Figs. (1) and (9) by subtracting the product of the input current instantaneous value |is| (absolute value) and proportional gain Kp from the maximum duty ratio of 1 (100%). However, when the ratio of the OFF period is set in the PWM timer for controlling the switching operation, it is not necessary to subtract the product from 1, because the product corresponds to the ratio of the OFF period.

The DC voltage ripple corrector 50B then computes the DC voltage mean value from the detected DC voltage value 5c by using filter means 501, and subtracts the DC voltage mean value from the DC voltage value 5c to extract a DC voltage ripple component Δed contained in the DC voltage value 5c. Further, the configuration is such that the extracted DC voltage ripple component Δed is multiplied by a ripple correction proportional gain Ke for modifying the amplitude of Δed, and then the product is subtracted from the duty ratio signal d1 computed at the boosting ratio stabilization controller 50A described above.

Here, the ripple correction proportional gain Ke is used for adjusting the feedback of the DC voltage ripple component Δed. This value Ke is preferably adjusted based on the capacitance of the smoothing capacitor 4 or the power consumption of the load. Further, there may be provided a function that can modify the value Ke during operation depending on the power consumption of the load. In addition, the power consumption of the load may be determined by directly detecting the consumed DC power or calculated from the DC voltage and DC current, or alternatively it may be estimated using the DC voltage ripple amplitude, input current, DC current, etc.

As described above, the present embodiment is realized by combining the boosting ratio stabilization controller 50A and DC voltage ripple corrector 50B which is a configuration feature of the invention. The final equation for calculating the duty ratio signal d is:

$$d = 1 - Kp \cdot |is| - Ke \cdot \Delta ed \quad \cdots\cdots\cdots\cdots (10)$$
$$KP = 1 / (a \cdot is) \qquad \Delta ed = ed - ed_o$$

where ed and edo are the DC voltage (instantaneous value) and DC voltage (average value), respectively.

Here, it is preferable that the duty ratio signal d is decreased when the DC voltage ripple component $\Delta ed$ is positive, while it is increased when $\Delta ed$ is negative.

The effect of the embodiment will be described with reference to the operating waveforms of Figs. 3 and 4. Here, the operational conditions are as follows: the power supply voltage is 200 V; and the input current (effective value) is 16 A.

Fig. 3(a) shows the operating waveform of each part when the power supply circuit of the embodiment is operated only using the boosting ratio stabilization controller 50A, and Fig. 3(b) the harmonic analysis of the input current thereof. Fig. 4(a) shows the operating waveform of each part of the power supply circuit according to the embodiment, and Fig. 4(b) the harmonic analysis of the input current thereof. The operating waveforms in each figure are, from top to bottom, the DC voltage ed, power supply voltage es, input current "is" and reactor current $i_L$, respectively. The standard (IEC61000-3-2) is also shown together with the harmonic analysis of the input current in Figs. 3(b) and 4(b).

As seen from Fig. 3, when only the boosting ratio stabilization controller 50A is used, there occurs a distortion (step) near the zeros (position A) of the input current "is". This increases harmonic components in the input current and thus cannot meet the standard. This is probably because, in Equation (5), as the inductance L becomes large, the input current is delayed in phase and never drops to zero, thereby causing a distortion. In other words, in Fig. 3(a) the minimum of the reactor current iL is $\Delta V$ higher than the zero level (0 V), which is a cause of the distortion in the input current "is". On the other hand, as shown in Fig. 4, the present embodiment can suppress the distortion (step) near the zeros of the input current waveform, and as a result the harmonic components thereof can be reduced, thus adequately meeting the standard. However, the DC voltage ripple amplitude increases slightly.

Although the DC voltage ripple correction method according to the embodiment has a configuration similar to that described in the above-mentioned Japanese Patent No. 2809463, it has the completely opposite effect. Namely, the technology of the above-mentioned Japanese Patent No. 2809463 adds the DC voltage ripple component to the duty ratio signal computed using the basic scheme and the resulting sum is fed back to distort the input current, thereby suppressing the DC voltage ripple. By contrast, the present embodiment subtracts the DC voltage ripple component from the duty ratio signal computed at the boosting ratio stabilization controller to increase the DC voltage ripple component, thereby suppressing the distortion near the zeros of the input current waveform.

As described above, the present embodiment can solve the problem associated with using only the boosting ratio stabilization controlled 50A which is a technology described in the above-mentioned Japanese Patent No. 2809463, and therefore can realize a power supply circuit capable of suppressing the distortion in the input current waveform and reducing the harmonic current therein.

Next, an exemplary application of the control circuit for operating the power supply circuit according to the embodiment will be described with reference to Fig. 5.

This application integrates the control circuit 5 of Fig. 1 on a hybrid IC, and Fig. 5 is an outline drawing thereof. Here, in view of ease of component replacement or noise prevention, the shunt resistance 53 is preferably not integrated on the hybrid IC but separately mounted like power circuit components such as the switching element 31.

While the control circuit 5 of Fig. 1 has three I/O terminals: an input current detection terminal, DC voltage detection terminal and drive signal output terminal, besides these there may be provided other terminals or functions such as a boosting ratio modification terminal, ripple correction proportional gain modification terminal, and load status detection terminal, thereby realizing a hybrid IC with improved versatility.

With the above described method, the distortion in the input current waveform is suppressed, and, in addition, the circuit efficiency can be improved by stopping the switching operation or operating the switching at a fixed duty ratio during the latter half of each half cycle of the power supply.

While the power supply circuit of the present embodiment offers excellent controllability and high power factor, and can suppress harmonic current components, the commercial application thereof will be further promoted by developing a controller substrate (such as a hybrid IC and module IC) implementing the present embodiment.

Second Embodiment

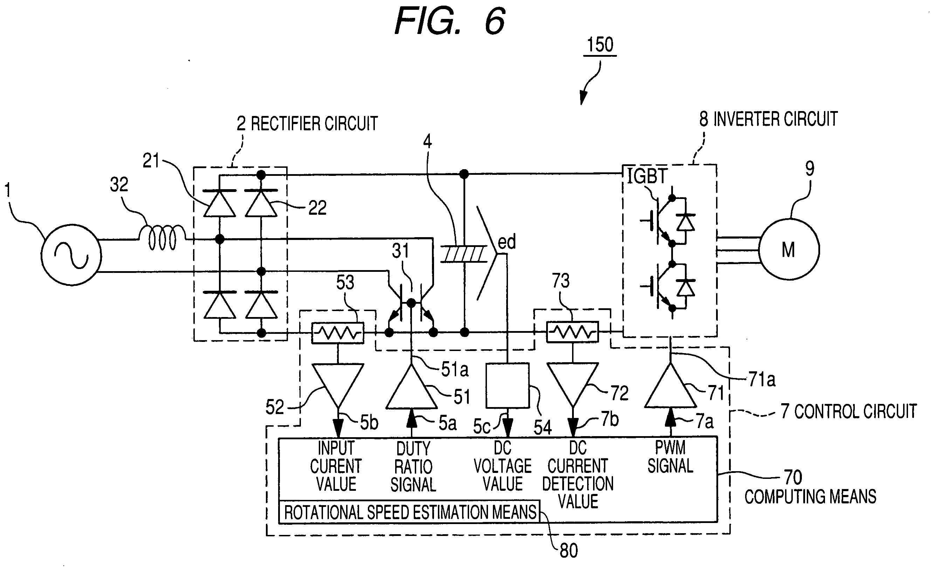

Next, a configuration of a second embodiment of the present invention will be described with reference to Figs. 6 to 8.

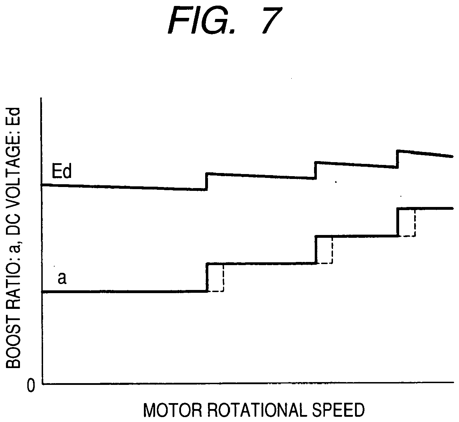

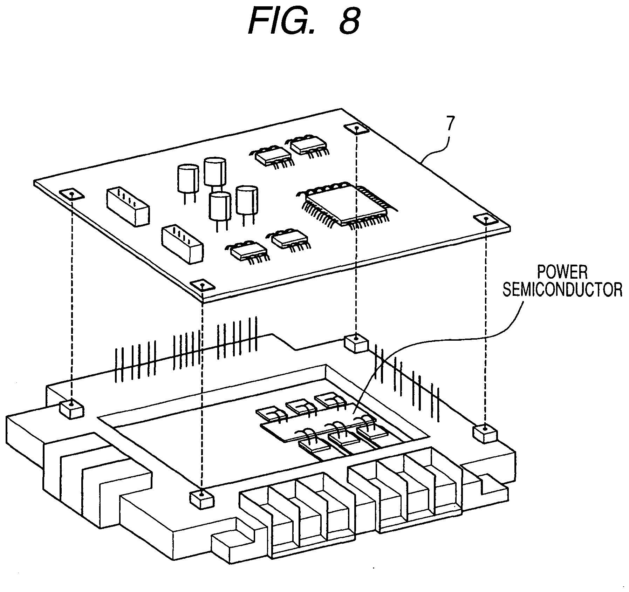

Fig. 6 is a block diagram of the present embodiment; Fig. 7 explains an operation when changing a boosting ratio depending on load status; and Fig. 8 is an outline drawing of an exemplary application of the present embodiment. The same parts as in the first embodiment are assigned the same reference number and the description thereof will be omitted here.

In the configuration of Fig. 6, a power supply circuit of the present embodiment has, as a load, a motor driver circuit including an inverter circuit 8 for driving a motor 9, and control circuits for the power supply circuit of the present embodiment and the inverter circuit are combined together. In other words, a control circuit 7 of Fig. 6 uses a single microcomputer for controlling the power supply circuit and inverter circuit.

Only the parts different from those of the first embodiment will be described herein. The inverter circuit 8 includes IGBTs and diodes, and the motor 9 is a synchronous permanent magnet motor.

Although the circuit configuration of the boost chopper circuit is different from that of the first embodiment, it still provides operations similar to those of the first embodiment. Here, diodes 21 and 22 in a rectifier circuit 2 function to rectify the power supply as well as also provide an operation similar to that of the diode 33 of the boost chopper circuit 3 of the first embodiment (Fig. 1). In other words, the diodes 21 and 22 perform a dual role, and therefore this configuration can save one diode.

The control circuit 7 controls the power supply circuit and inverter circuit of the embodiment, in which a microcomputer (computing means 70) performs computation for controlling the power supply circuit as described in the first embodiment as well as computation for controlling the inverter circuit.

Since the configuration of a control circuit 5 of the power supply circuit has already been described in the first embodiment (Fig. 1), only a configuration of the inverter circuit 8 will be briefly explained herein.

Since the present embodiment employs a motor current and position sensorless vector control for the motor, detectable information from the inverter circuit 8 is only a DC current flowing through a shunt resistance 73 provided at the DC side. More specifically, an amplifier 72 amplifies the voltage generated across the shunt resistance 73 and outputs a DC current detection value 7b, which is then inputted to the microcomputer via an A/D converter contained in the microcomputer. Further, a driver circuit 71 drives a PWM signal 7a and outputs a drive signal 71a, which is then delivered to switching elements of the inverter circuit.

Furthermore, computing means 70 includes: rotational speed estimation means 80 for estimating the rotational speed of the motor 9; control means for controlling the power supply circuit described in the first embodiment (not shown); and motor current and position sensorless vector control means (not shown), in which internal information of each means can be exchanged with one another. In addition, the rotational speed estimation means 80 functions as load status information generation means.

Next, a method for modifying a boosting ratio "a" depending on load status will be described with reference to Fig. 7. While, basically, a certain effect can be obtained by fixing the boosting ratio "a" similarly to the first embodiment, the present embodiment modifies the boosting ratio "a" depending on load status in order to further improve efficiency and stabilize motor control.

The present embodiment will be described, by way of example, for the case where the motor rotational speed is used as the load status for modifying the boosting ratio "a". In Fig. 7, the abscissa represents the motor rotational speed, and the ordinate represents the boosting ratio "a" and DC voltage Ed (average value). As shown in Fig. 7, the boosting ratio "a" is reduced at lower motor rotational speeds, or in other words at lighter loads. Therefore, at lighter loads, the DC voltage can be suppressed to a low level, thus decreasing switching and other losses in the power supply circuit as well as also decreasing losses in the inverter circuit and motor, and, as a result, high efficiency operation can be provided. However, this method increases harmonic components contained in the input current waveform, and also reduces the power factor of the power supply. Therefore, the setting method of the boosting ratio "a" employed should be chosen by considering the trade-off between the reduction in losses and the decrease in power factor.

On the other hand, as the motor rotational speed (the load of the control circuit) increases, the harmonic components of the input current may exceed the standard or the power factor may significantly decrease. Further, the DC voltage Ed may continue to decrease. To overcome this, as the motor rotational speed (the load of the control circuit) increases, the boosting ratio "a" is increased, and thereby a high efficiency operation can always be provided irrespective of the motor rotational speed (the load).

While the present embodiment stepwise modifies the boosting ratio "a" depending on the motor rotational speed, in an actual operation, some hysteresis may be provided when modifying the ratio as indicated by dashed lines. Further, the boosting ratio "a" may be modified linearly or using a function. Furthermore, the rotational speed of the motor can be controlled by using the boosting ratio "a". In other words, the rotational speed of the motor can be controlled by modifying the boosting ratio "a" and changing the DC voltage.

While the present embodiment has been described for the case of an inverter circuit using a vector control method, a conventionally widely used 120 degree conduction inverter circuit may be used with a similar effect.

In addition, while the embodiment uses the motor rotational speed as the load status information, any value variable depending on load status may be used, such as the input current, DC current, DC voltage, DC power, DC voltage ripple amplitude, input power, torque, peak-to-peak ratio of the inverter output and duty ratio of the inverter. Further, the above-mentioned values may be used in combination.

Fig. 8 is an outline drawing of an exemplary application of the present embodiment, in which the power supply circuit, inverter circuit 8 and control circuit 7 are integrated in a module.

This module is an integrated module which mounts bare power semiconductor chips such as IGBTs and diodes on its lower part, and disposes the control circuit substrate on its upper part.

Third Embodiment

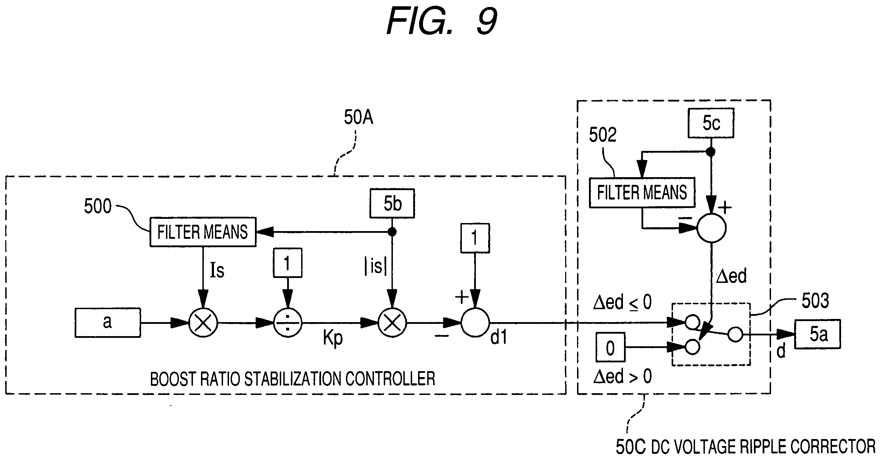

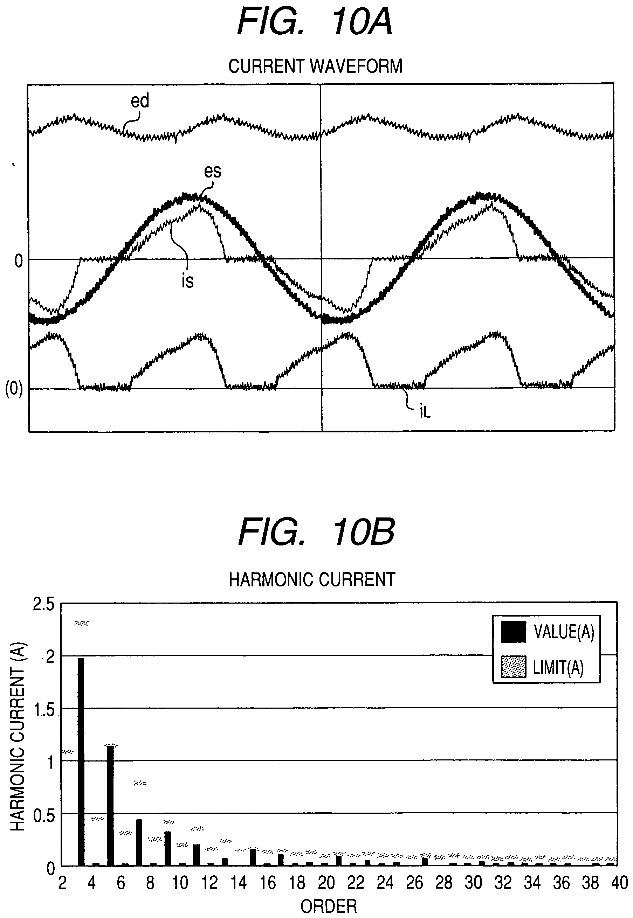

A third embodiment of the present invention will be described with reference to Figs. 9 and 10. The configuration of the power supply circuit of according to the present embodiment is similar to that described in Fig. 1, and differs only in the internal configuration of the computing means 50.

Fig. 9 is a block diagram of the present embodiment, and Fig. 10 illustrates operating waveforms obtained using the present embodiment. The present embodiment uses the same boosting ratio stabilization control scheme as described in the first embodiment, but it stops the switching operation during the latter half of each half cycle of the power supply by utilizing the DC voltage ripple component, thereby allowing a further improvement in the efficiency of the power supply circuit over the technique of the above-mentioned Japanese Patent No. 2809463 as well as the first embodiment configuration of the present invention. Although the present embodiment will be described based on the above-described boosting ratio stabilization control scheme, it can be also applied to the basic scheme.

The control block diagram of Fig. 9 will be explained. Since a boosting ratio stabilization controller 50A is similar to that of the first embodiment, the description thereof will be omitted. A configuration feature of the present embodiment is a DC voltage ripple corrector 50C which modifies a duty ratio signal d1 (a first duty ratio signal) computed at the boosting ratio stabilization controller 50A depending on the positive or negative sign of the DC voltage ripple component.

Similarly to the DC voltage ripple corrector 50B of the first embodiment, the DC voltage ripple corrector 50C includes: means for inputting a DC voltage value 5c, computing the average value of the DC voltage using filter means 502 and extracting a DC voltage ripple component $\Delta ed$ by subtracting the average value from the DC voltage value 5c; and duty ratio signal modification means 503 for determining the sign of the extracted DC voltage ripple component $\Delta ed$ and modifying a duty ratio signal d based on the determined sign.

The duty ratio signal modification means 503 set the duty ratio signal d to "0" when the DC voltage ripple component is positive, while when the DC voltage ripple component is negative, it outputs the duty ratio signal d1 computed at the boosting ratio stabilization controller 50A. With this operation, the switching operation is stopped during the latter half of each half cycle of the power supply. The operating waveforms are shown in Fig. 10.

Fig. 10 illustrates the operating waveforms and the harmonic analysis of the input current, similarly to Figs. 3 and 4. The operating waveforms are, from top to bottom, a DC voltage ed, power supply voltage es, input current "is" and reactor current iL, respectively. The operational conditions are as follows: the power supply voltage is 200 V; and the input current effective value is 7 A.

The input current waveform in Fig. 10 shows that the switching operation is stopped during the latter half of each half cycle of the power supply and as a result the amplitudes of the harmonics increase. However, this switching scheme increases only relatively lower-order harmonics, thus meeting the standard when it is used below a certain current level. Therefore, it can be used for a power supply circuit for driving only a relatively light load.

In addition, there may be added a function: which uses this control scheme when the input current (the load) is relatively low; and which, when driving a relatively high load, stops using this control scheme (the duty ratio signal modification means 503) and switches to the normal control, thereby offering a power supply circuit with a higher electrical capacity. However, this function will be described later in a fourth embodiment.

The present embodiment stops the switching operation depending on the positive or negative sign of the DC voltage ripple component, based on the fact that the DC voltage ripple is approximately synchronized with the power supply. In other words, the present scheme can stop the switching operation during a predetermined phase range of the power supply without the need of directly detecting the phase of the power supply.

While the present embodiment has been described with reference to the power supply circuit 100 of Fig. 1, the same operation can be obtained by using the circuit configuration of Fig. 6 described in the second embodiment.

In addition, the embodiment has been described for the case that the duty ratio signal is modified to "0" when the DC voltage ripple component is positive; however the duty ratio signal may not necessarily be set to "0" but rather may be modified to any predetermined value close to a minimum pulse width.

Fourth Embodiment

In the first embodiment, a method has been described which utilizes the DC voltage ripple component in order to suppress the distortion (step) near the zeros of the input current. In the third embodiment, a method has been described which utilizes the DC voltage ripple component in order to modify the duty ratio signal such that the switching operation is stopped during the latter half of each half cycle of the power supply.

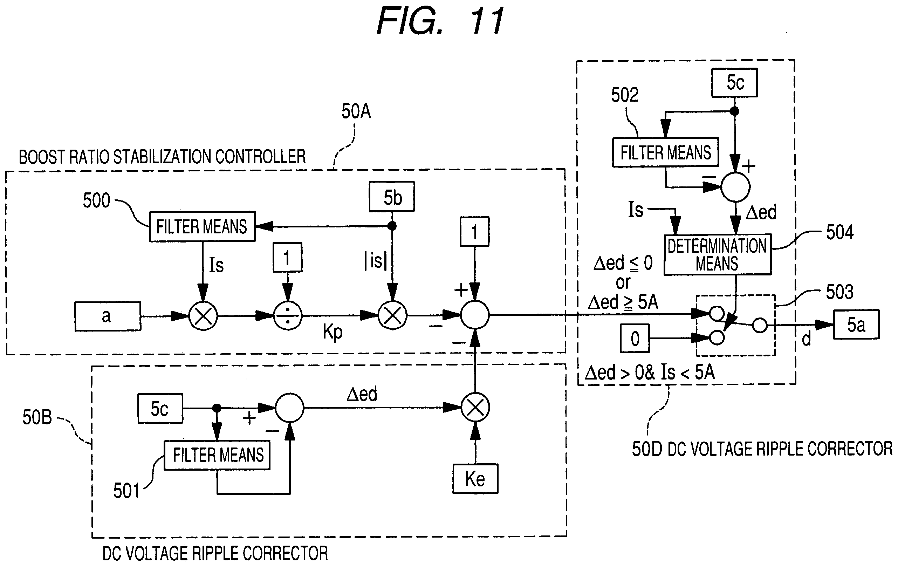

A fourth embodiment of the present invention will describe a control method that combines the above two schemes. Figs. 11 to 13 are the control block diagrams.

In Fig. 11, the DC voltage ripple corrector 50B described in the first embodiment is added to the boosting ratio stabilization controller 50A of the third embodiment in Fig. 9, and part of the DC voltage ripple corrector 50C of Fig. 9 is modified. Here, the difference is that the duty ratio signal modification means 503 utilizes, as its reference value for modification, the DC voltage ripple component and the amplitude of the input current Is (effective value). For this purpose, a DC voltage ripple corrector 50D adds determination means 504 to the above-described DC voltage ripple corrector 50C.

The operation of the determination means 504 added will now be described. While the third embodiment modifies the duty ratio signal based only on the positive or negative sign of the DC voltage ripple component, the present embodiment does so based on the AND operation of the positive or negative sign of the DC voltage ripple component and the amplitude of the input current Is (effective value). In the present embodiment, the reference value of the input current Is (effective value) is set at 5 A.

In addition, the present embodiment may also modify the boosting ratio depending on load status similarly to the second embodiment. For example, the following control may be performed. When the input current Is (effective value) is not more than 5 A, the boosting ratio "a" is fixed to a minimum value and the switching operation is stopped during the latter half of each half cycle of the power supply similarly to the third embodiment. When the input current Is (effective value) exceeds 5 A, the duty ratio signal modifying operation of the duty ratio signal modification means 503 is stopped and switched to the operation of the boosting ratio stabilization control scheme, in which when the input current Is (effective value) further increases, the boosting ratio "a" is modified depending on the input current Is (effective value) as described in Fig. 7.

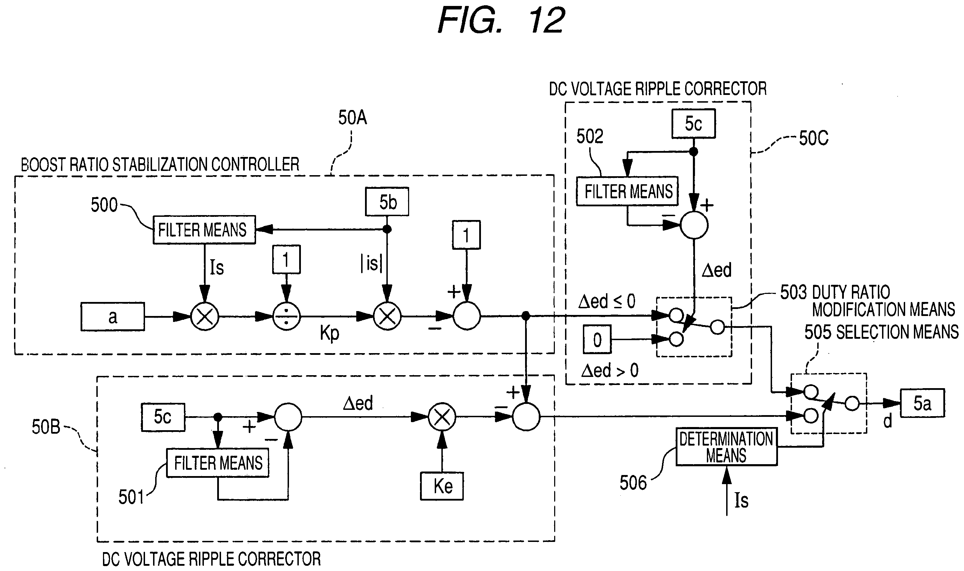

A scheme of Fig. 12 includes the control schemes of the first and third embodiments respectively shown in Figs. 2 and 9, and selects the duty ratio signal depending on load status.

A method for selecting the duty ratio signal will be described with reference to Fig. 12. In Fig. 12, a selector 505 serving as selection means switches between duty ratio signals from DC voltage ripple correctors 50B and 50C depending on the select signal of determination means 506, and outputs a duty ratio signal 5a. The determination means 506, for example, detects an input current Is and output the select signal based on the amplitude thereof.

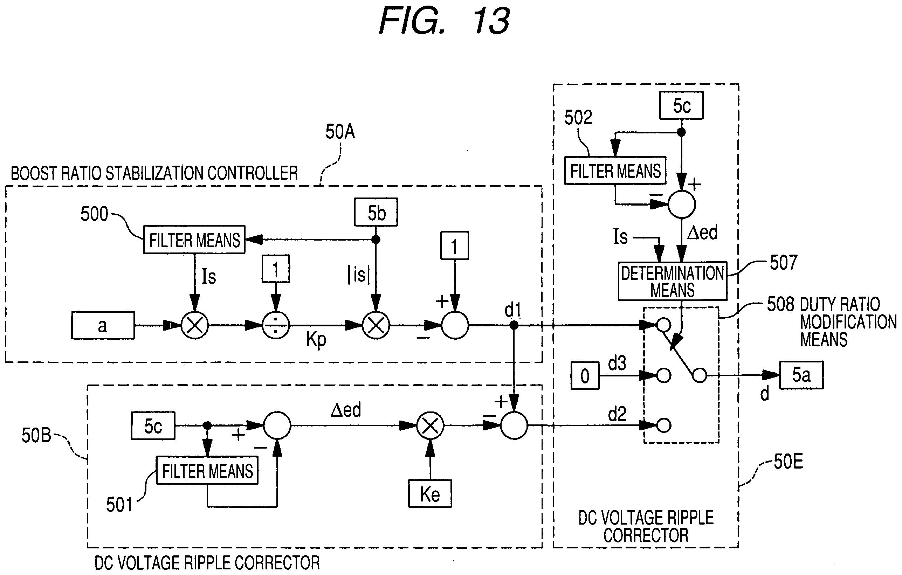

Fig. 13 is a block diagram of a control which provides an effect similar to that of Fig. 12. It differs from Fig. 12 in a DC voltage ripple corrector 50E. In the configuration of the DC voltage ripple corrector 50E, determination means 507 is added to the DC voltage ripple corrector 50C of Fig. 12, and the duty ratio signal modification means 503 is modified to duty ratio signal modification means 508 having three inputs and one output. That is, the duty ratio signal modification means 508 switches between: a duty ratio signal d1 outputted from a boosting ratio stabilization controller 50A; a duty ratio signal d2 outputted from a DC voltage ripple corrector 50B; and a duty ratio signal d3 having a constant value of "0".

While the present embodiment (the third example thereof) uses the input current Is as the signal indicative of load status, any value variable depending on load status may be used, such as the DC current, DC voltage, DC voltage ripple amplitude, DC power, input power, torque, peak-to-peak ratio of the inverter output and duty ratio of the inverter. Further, the above-mentioned values may be used in combination.

By using the above three methods, the high efficiency operation described in the third embodiment can be performed when the load is relatively light, while when the load is medium or heavy, the current waveform distortion suppression operation described in the first and second embodiments can be performed, thereby increasing versatility of the power supply circuit of the present embodiment.

Fifth Embodiment

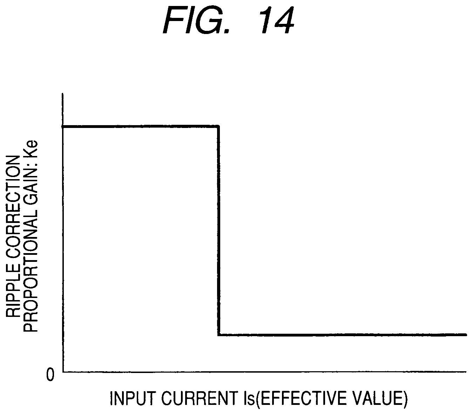

A fifth embodiment of the present invention will be described with reference to Fig. 14. In Fig. 14, the abscissa represents an input current, and the ordinate represents the ripple correction proportional gain Ke shown in Fig. 2. This embodiment is a scheme capable of performing the operation of the third embodiment using the control block of the first embodiment described in Fig. 2.

More specifically, the ripple correction proportional gain Ke is set at a somewhat excessively large value when the input current is low as shown in Fig. 14. By this means, the DC voltage ripple component is fed back more strongly at low current levels, thereby causing the duty ratio to be equal to 0 during the latter half of each half cycle of the power supply.

As described above, only by modifying the ripple correction proportional gain Ke, the high efficiency operation described in the third embodiment can be performed when the input current (the load) is relatively low, while when the load is heavy, the current waveform distortion suppression operation described in the first and second embodiments can be performed.

Although in the present embodiment, the ripple correction proportional gain Ke is modified by a somewhat excessively large amount, it may alternatively be modified depending on load status similarly to the case of the boosting ratio "a" as shown in Fig. 7, and thereby the amount of feedback from the DC voltage ripple component can be modified and the stopping period of the switching operation can also be adjusted.

In the case of the hybrid IC of Fig. 5 and the module of Fig. 8, the ripple correction proportional gain Ke can preferably be adjusted from outside, because it needs to be changed depending on the capacitance of the smoothing capacitor or the load connected thereto.

(Sixth Embodiment)

While each embodiment described above changes the duty ratio based on the DC voltage ripple component, the variation in the duty ratio can also computed.

If an current phase correction $\Delta d$ is included in the duty ratio d, one obtain:

$$d = 1 - Kp \cdot Is + \Delta d \quad \cdots\cdots\cdots\cdots\cdots\cdots\cdots (11)$$

Substituting Equation (11) into Equation (4) and assuming vs = Vm·sin(ωt) yields:

$$is = (Vm/L)\ \{1/(\omega^2 + \alpha^2)\}\ (\alpha\sin\omega t - \omega\cos\omega t) + Ed/L \cdot \Delta d + I_o e^{-\alpha t} \cdots\cdots\cdots\cdots\cdots\cdots\cdots\cdots (12)$$

where $I_0$ is the initial value of "is" and $\alpha$ = Kp·Ed/L.

In order to control the current and voltage phases to be in phase with each other, the cosωt component is required to be equal to "0", and therefore the current phase correction duty ratio $\Delta d$ satisfies the following equation:

$$is = (Vm/L)\ \{\alpha/(\omega^2 + \alpha^2)\}\ \sin\omega t - (Vm/L)\ \{\omega/(\omega^2 + \alpha^2)\}\ \cos\omega t + Ed/L \cdot \Delta d = 0$$

This equation can be rearranged to solve $\Delta d$ as follows:

$$\Delta d = (Vm/Ed)\ \{\omega/(\omega^2 + \alpha^2)\}\ \cos\omega t$$
$$= Ke\cos\omega t \quad \cdots\cdots\cdots\cdots\cdots\cdots\cdots\cdots\cdots (13)$$

where Ke = (Vm/Ed){ω/(ω² + α²)}.

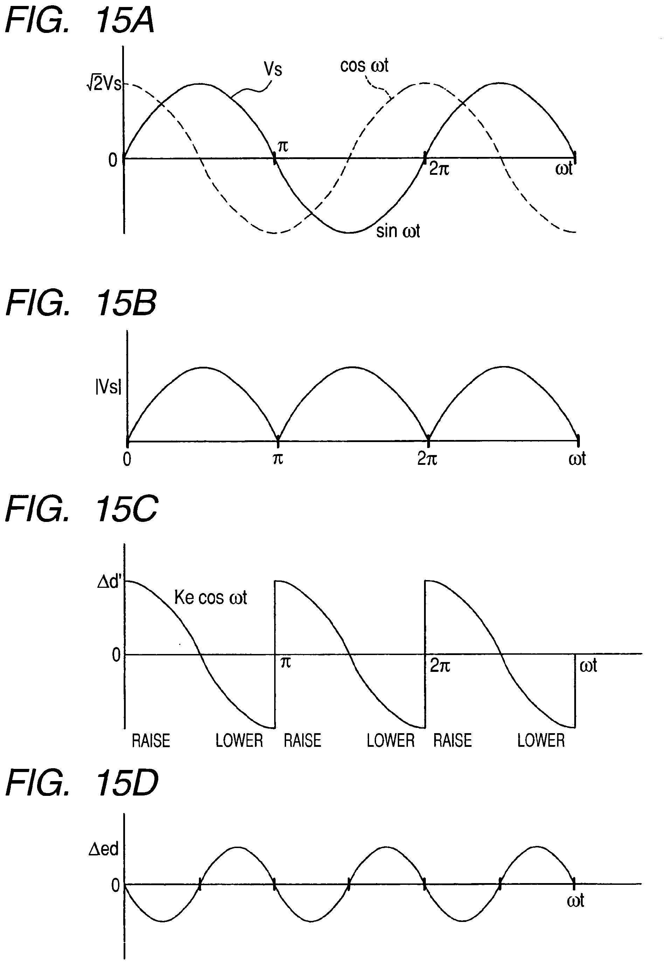

Next, with reference to Fig. 15, a specific method will be described for removing the distortion in the input current "is" using the current phase correction duty ratio $\Delta d$ derived from the basic equation (13).

Fig. 15(a) illustrates the waveforms of the power supply voltage $vs = \sqrt{2}Vs \cdot \sin \omega t$ and cosωt which is π/2 out of phase therewith, while Fig. 15(b) illustrates the output voltage waveform |vs| of the rectifier circuit 2. Fig. 15(c) illustrates a waveform obtained by modifying the waveform of $\Delta d$ = Ke·cosωt. Here, the polarity of $\Delta d$ is reversed depending on the polarity of the power supply voltage vs. That is, when the power supply voltage is positive, the waveform $\Delta d$ is equal to Ke·cosωt which is π/2 out of phase with the power supply voltage, while when the power supply voltage is negative, the waveform $\Delta d$ is equal to -Ke·cosωt: the negative of Ke·cosωt which is π/2 out of phase with the power supply voltage.

When dealing with an AC signal, the correction can be performed using $\Delta d$ = Ke·cosωt (basic equation). However, the embodiments of the invention actually utilize an DC signal after rectification such as the power supply voltage waveform in Fig. 15(b) for determining the actual duty ratio; so, the polarity of the current phase correction duty ratio $\Delta d$ must be reversed depending on the polarity of the power supply voltage.

Therefore, the actual current phase correction duty ratio $\Delta d$ has a waveform shown in Fig. 15(c). Hence, $\Delta d$ derived from Equation (13) ($\Delta d$ = Ke·cosωt) is modified to provide the current phase correction duty ratio $\Delta d$ shown as the waveform in Fig. 15(c), which can then be used to correct the duty ratio d, thus preventing input current distortion even when the inductance of the reactor is large.

Turning to the waveform of Fig. 15(c), it is shown that the current phase correction duty ratio $\Delta d$ should just be increased (raised) during the first half of each half cycle of the power supply and decreased (lowered) during the latter half. In addition, the waveform of the DC voltage ripple component $\Delta ed$ shown in Fig. 15(d) is substantially synchronized with the current phase correction duty ratio $\Delta d$, and it is therefore expected that a signal corresponding to the DC voltage ripple component $\Delta ed$ can also be utilized instead of the current phase correction duty ratio $\Delta d$ for providing an effect of suppressing input current distortion. This scheme utilizing the DC voltage ripple component is employed in the above-described each embodiments.

Modification

The present invention is not limited to the above-described embodiments, but various modifications thereof such as the following one may be made.

(1) While each of the above-described embodiments uses the motor rotational speed as the load status information, as such information there may be used at least one of the input power, input current, DC voltage, DC voltage ripple amplitude, DC current, DC power, rotational torque, input of the inverter circuit, output of the inverter circuit, duty ratio of the inverter and peak-to-peak ratio of the inverter output.

**Claims**

1. A power supply circuit, comprising:

   a rectifier circuit (2} for converting an AC voltage to a DC voltage;
   a boost chopper circuit (3) for boosting an output voltage of the rectifier circuit (2} based on a duty ratio signal;
   a smoothing circuit (4) for smoothing an output voltage of the boost chopper circuit; and
   a control means (5) for creating the duty ratio signal, wherein
   the control means (5) is provided with a function for extracting a DC voltage ripple component ($\Delta$ed) contained in the DC voltage value (ed) of the smoothing circuit (4), and modifying the duty ratio signal based on the DC voltage ripple component,
   **characterized in** further comprising a duty ratio signal modification means (503, 508) configured to output as duty ratio signal (d) a first duty ratio signal (d1) computed at a boosting ratio stabilization controller (50A) when the DC voltage ripple component ($\Delta$ed) is negative and to set the duty ratio signal d to some constant preset value when the DC voltage ripple component ($\Delta$ed) is positive

2. The power supply circuit according to Claim 1, wherein the control means (5) further comprises:

   an input current information generation means (52, 53) to detect an input current flowing into the rectifier circuit (2); and
   a load status information generation means (80) for generating a load status information to indicate a status of a load connected to the smoothing circuit (4),
   wherein the control means (5) sets a coefficient depending on the load status information and creates the duty ratio signal based on a product of the coefficient and input current.

3. The power supply circuit according to Claim 2, wherein the load status Information is at least one selected from the group consisting of an input power, input current, DC voltage, DC voltage ripple amplitude, DC current and DC power.

4. The power supply circuit according to Claim 1, wherein the control means (5) further comprises:

   an input current Information generation means (52, 53) to detect an input current flowing into the rectifier circuit (2);
   a load status Information generation means (80) for generating a load status information to indicate a status of a load connected to the smoothing circuit; and
   a DC voltage ripple component generation means for extracting a DC voltage ripple component ($\Delta$ed) contained in the DC voltage value (ed) of the smoothing circuit (4),
   wherein the control means (5) computes a product of a coefficient set depending on the load status information and the input current, and creates the duty ratio signal (d) specifying the operation of the boost chopper based on the product and the DC voltage ripple component ($\Delta$ed).

5. The power supply circuit according to Claim 1, wherein the control means (5) further comprises:

   an input current information generation means (52, 53) to detect an input current flowing into the rectifier circuit (2);
   a load status information generation means (80) for generating load status information indicative of a status of a load connected to the smoothing circuit (4);

a first duty ratio signal generation means for determining as the function a value based on a product of a coefficient set depending on the load status information and the input current to be a first duty ratio signal (d1); and a second duty ratio signal generation means for outputting the constant preset value as a second duty ratio signal, wherein the control means (5) uses at least one of the DC voltage ripple component ($\Delta$ed) and load status information to determine one of the first and second duty ratio signals to be the duty ratio signal (d).

6. The power supply circuit according to Claim 5, wherein the first duty ratio signal (d1) is generated based on the product and the DC voltage ripple component ($\Delta$ed).

7. The power supply circuit according to Claim 5, wherein the control means (5) is further provided with a function for outputting the second duty ratio signal when the load status Information is not more than a predetermined value, and outputting the first duty ratio signal when the load status Information is more than the predetermined value.

8. The power supply circuit according to Claim 1, wherein the control means (5) further comprises

an input current Information generation means (52, 53) to detect an input current flowing into the rectifier circuit (2);
a load status information generation means (80) for generating a load status Information to indicate a status of a load connected to the smoothing circuit;
a DC voltage ripple component generation means for extracting a DC voltage ripple component ($\Delta$ed) contained in the DC voltage value (ed) of the smoothing circuit (4);
a first duty ratio signal generation means for computing as the function a product of a coefficient set depending on the load status information and the input current, determining the product to be a first duty ratio signal (d1);
a second duty ratio signal generation means for outputting the constant preset value as a second duty ratio signal (d3);
a third duty ratio signal generation means for generating a third duty ratio signal (d2) based on the product and the DC voltage ripple component ($\Delta$ed); and the duty ratio signal modification means (508) is configured to output one of the first, second and third duty ratio signals as the duty ratio signal (d) specifying the operation of the boost chopper circuit (3) by using at least one of the DC voltage ripple component ($\Delta$ed) and the load status information.

9. The power supply circuit according to Claim 2, wherein the load connected to the smoothing circuit (4) is a motor and an inverter circuit for driving the motor; the load status information is a rotational speed of the motor; and the coefficient is set based on a product of the load status information and a boosting ratio.

10. The power supply circuit according to Claim 1, wherein the DC voltage ripple component includes a product of a ripple component of the DC voltage and a ripple correction proportional gain.

11. The power supply circuit according to Claim 10, wherein the ripple correction proportional gain includes a function for modifying the ripple correction proportional gain depending on the load status Information.

**Patentansprüche**

1. Stromversorgungsschaltung umfassend:

eine Gleichrichterschaltung (2) zum Umsetzen einer Wechselspannung in eine Gleichspannung;
eine Booster-Chopper-Schaltung (3) zur Verstärkung einer Ausgangsspannung der Gleichrichterschaltung (2) basierend auf einem Tastverhältnissignal;
eine Glättungsschaltung (4) zum Glätten einer Ausgangsspannung der Booster-Chopper-Schaltung; und
ein Steuereinrichtung (5) zum Erzeugen des Tastverhältnissignals, wobei
die Steuereinrichtung (5) mit einer Funktion ausgestattet ist, um eine Gleichspannungs-Welligkeitskomponente ($\Delta$ed) zu extrahieren, die in dem Gleichspannungswert (ed) der Glättungsschaltung (4) enthalten ist, und um das Tastverhältnissignal basierend auf der Gleichspannungs-Welligkeitskomponente zu modifizieren,
**gekennzeichnet durch**
ferner umfassend eine das Tastverhältnissignal modifiziere Einrichtung (503,508), die konfiguriert ist, um als Tastverhältnissignal (d) ein erstes Tastverhältnissignal (d1) auszugeben, das in einem Boosterverhältnis-Stabilisierungscontroller (50A) berechnet wird, wenn die Gleichspannungs- Welligkeitskomponente ($\Delta$ed) negativ ist, und um das Tastverhältnissignal (d) auf einen konstanten, voreingestellten Wert einzustellen, wenn die

Gleichspannungs-Welligkeitskomponente ($\Delta$ed) positiv ist.

2. Stromversorgungsschaltung nach Anspruch 1, worin die Steuereinrichtung (5) ferner umfasst:

eine Eingangsstrominformation-Generatoreinrichtung (52,53), um einen Eingangsstrom zu detektieren, der in die Gleichrichterschaltung (2) fließt; und
eine Laststatusinformation-Generatoreinrichtung (80) zur Erzeugung einer Laststatusinformation, um den Status einer Last, die an der Glättungsschaltung (4) angeschlossen ist, anzuzeigen, wobei
die Steuereinrichtung (5) einen Koeffizienten in Abhängigkeit von der Laststatusinformation setzt und das Tastverhältnissignal basierend auf einem Produkt des Koeffizienten mit dem Eingangsstrom erzeugt.

3. Stromversorgungsschaltung nach Anspruch 2, worin die Laststatusinformation wenigstens eine Information ist, die ausgewählt ist aus der Gruppe bestehend aus einer Eingangsleistung, einem Eingangsstrom, einer Gleichspannung, einer Gleichspannung-Welligkeitsamplitude, einem Gleichstrom und einer Gleichstromleistung.

4. Stromversorgungsschaltung nach Anspruch 1, worin die Steuereinrichtung (5) ferner umfasst:

eine Eingangsstrominformation-Generatoreinrichtung (52,53), um einen Eingangsstrom zu detektieren, der in die Gleichrichterschaltung (2) fließt;
eine Laststatusinformation-Generatoreinrichtung (80) zur Erzeugung einer Laststatusinformation, um einen Status einer Last, die an der Glättungsschaltung angeschlossen ist, anzuzeigen; und
eine Gleichspannungs-Welligkeitskomponenten-Generatoreinrichtung zum Extrahieren einer Gleichspannungs-Welligkeitskomponente ($\Delta$ed), die in dem Gleichspannungswert (ed) der Glättungsschaltung (4) enthalten ist,
wobei die Steuereinrichtung (5) ein Produkt aus einem Koeffizienten, der in Abhängigkeit von der Laststatusinformation gesetzt ist, und einer Eingangsspannung berechnet und das Tastverhältnissignal (d) erzeugt, welches den Betrieb der Booster-Chopper-Schaltung basierend auf dem Produkt und der Gleichspannung-Welligkeitskomponente ($\Delta$ed) spezifiziert.

5. Stromversorgungsschaltung nach Anspruch 1, worin die Steuereinrichtung (5) ferner umfasst:

eine Eingangsstrominformation-Generatoreinrichtung (52,53), um einen Eingangsstrom zu detektieren, der in die Gleichrichterschaltung (2) fließt;
eine Laststatusinformation-Generatoreinrichtung (80) zur Erzeugung einer Laststatusinformation, die einen Status einer Last, die mit der Glättungsschaltung (4) verbunden ist, anzeigt;
eine erste Tastverhältnissignal-Generatoreinrichtung, um basierend auf einem Produkt des Koeffizienten, der in Abhängigkeit von der Laststatusinformation gesetzt ist, und des Eingangsstroms als die Funktion einen Wert zu bestimmen, der das erste Tastverhältnissignal (d1) sein soll; und
eine zweite Tastverhältnissignal-Generatoreinrichtung zum Ausgeben des konstanten, voreingestellten Wertes als ein zweites Tastverhältnissignal,
worin die Steuereinrichtung (5) wenigstens die Gleichspannungs-Welligkeitskomponente ($\Delta$ed) und/oder die Laststatusinformation verwendet, um das erste oder das zweite Tastverhältnissignal als Tastverhältnissignal (d) zu bestimmen.

6. Stromversorgungsschaltung nach Anspruch 5, worin das erste Tastverhältnissignal (d1) erzeugt wird auf der Basis des Produkts und der Gleichspannungs-Welligkeitskomponente ($\Delta$ed).

7. Stromversorgungsschaltung nach Anspruch 5, worin die Steuereinrichtung (5) ferner mit einer Funktion versehen ist, um das zweite Tastverhältnissignal auszugeben, wenn die Laststatusinformation nicht mehr als ein vorgegebener Wert ist, und um das erste Tastverhältnissignal auszugeben, wenn die Laststatusinformation mehr als der vorgegebene Wert ist.

8. Stromversorgungsschaltung nach Anspruch 1, worin die Steuereinrichtung (5) ferner umfasst:

eine Eingangsstrominformation-Generatoreinrichtung (52,53), um einen Eingangsstrom zu detektieren, der in die Gleichrichterschaltung (2) fließt;
eine Laststatusinformation-Generatoreinrichtung (80) zur Erzeugung einer Laststatusinformation, die einen Status einer Last, die mit der Glättungsschaltung (4) verbunden ist, anzeigt;

eine Gleichspannungs-Welligkeitskomponenten-Generatoreinrichtung zum Extrahieren einer Gleichspannungs- Welligkeitskomponente (Δed), die in dem Gleichspannungswert (ed) der Glättungsschaltung (4) enthalten ist;

eine erste Tastverhältnissignal-Generatoreinrichtung zum Berechnen als die Funktion ein Produkt des Koeffizienten, der in Abhängigkeit von der Laststatus Information gesetzt ist, und des Eingangsstroms, wodurch das Produkt bestimmt wird, das erste Tastverhältnissignal (d1) zu sein;

eine zweite Tastverhältnissignal-Generatoreinrichtung zum Ausgeben des konstanten, voreingestellten Wertes als ein zweites Tastverhältnissignal (d3)

eine dritte Tastverhältnissignal-Generatoreinrichtung zur Erzeugung eines dritten Tastverhältnissignals (d2) basierend auf dem Produkt und der Gleichspannungs-Welligkeitskomponente (Δed), und die konfiguriert ist, um das erste oder das zweite oder das dritte Tastverhältnissignal als das Tastverhältnissignal (d) auszugeben, das den Betrieb der Booster-Chopper-Schaltung (3) spezifiziert, indem wenigstens die Gleichspannungs-Welligkeitskomponente (Δed) und/oder die Laststatusinformation verwendet wird.

9. Stromversorgungsschaltung nach Anspruch 2, worin die Last, die an der Glättungsschaltung (4) angeschlossen ist, ein Motor und eine in Wärterschaltung zum Antreiben des Motors ist; wobei die Laststatusinformation eine Drehzahl des Motors ist und der Koeffizient auf einem Produkt der Laststatusinformation und dem Boosterverhältnis basiert.

10. Stromversorgungsschaltung nach Anspruch 1, worin die Gleichspannungs-Welligkeitskomponente ein Produkt einer Welligkeitskomponenten der Gleichspannung und einer zur Welligkeitskomponenten proportionalen Verstärkung umfasst.

11. Stromversorgungsschaltung nach Anspruch 10, worin die zur Welligkeitskomponenten proportionalen Verstärkung eine Funktion umfasst, um die zu der Welligkeitskomponenten proportionale Verstärkung in Abhängigkeit von der Last zu modifizieren.

**Revendications**

1. Circuit d'alimentation électrique comprenant :

un circuit redresseur (2), destiné à convertir une tension alternative en une tension continue ;
un circuit découpeur amplificateur (3), destiné à amplifier une tension de sortie du circuit redresseur (2) sur la base d'un signal de rapport cyclique ;
un circuit de lissage (4), destiné à lisser une tension de sortie du circuit découpeur amplificateur ; et
un moyen de commande (5) destiné à créer le signal de rapport cyclique, dans lequel :

le moyen de commande (5) est doté d'une fonction destinée à extraire une composante d'ondulation de la tension continue (Δed) contenue dans la valeur de tension continue (ed) du circuit de lissage (4), et à modifier le signal de rapport cyclique sur la base de la composante d'ondulation de la tension continue, **caractérisé en ce qu'**il comprend en outre un moyen de modification de signal de rapport cyclique (503, 508), conçu pour délivrer en sortie, en tant que signal de rapport cyclique (d),
un premier signal de rapport cyclique (d1) calculé dans un dispositif de commande de stabilisation du rapport d'amplification (50A), lorsque la composante d'ondulation de la tension continue (Δed) est négative, et pour régler le signal de rapport cyclique (d) à une certaine valeur constante préréglée, lorsque la composante d'ondulation de la tension continue (Δed) est positive.

2. Circuit d'alimentation électrique selon la revendication 1, dans lequel le moyen de commande (5) comprend en outre :

un moyen de génération d'information de courant d'entrée (52, 53), destiné à détecter un courant d'entrée circulant dans le circuit redresseur (2) ; et
un moyen de génération d'information d'état de charge (80), destiné à produire une information d'état de charge pour indiquer un état d'une charge connectée au circuit de lissage (4),
dans lequel le moyen de commande (5) règle un coefficient en fonction de l'information d'état de charge et crée le signal de rapport cyclique sur la base d'un produit du coefficient et du courant d'entrée.

3. Circuit d'alimentation électrique selon la revendication 2, dans lequel l'information d'état de charge est au moins une information sélectionnée dans le groupe constitué d'une puissance d'entrée, d'un courant d'entrée, d'une tension continue, d'une amplitude d'ondulation de la tension continue, d'un courant continu et d'une puissance en courant continu.

4. Circuit d'alimentation électrique selon la revendication 1, dans lequel le moyen de commande (5) comprend en outre :

un moyen de génération d'information de courant d'entrée (52, 53), destiné à détecter un courant d'entrée circulant dans le circuit redresseur (2) ;
un moyen de génération d'information d'état de charge (80), destiné à produire une information d'état de charge pour indiquer un état d'une charge connectée au circuit de lissage ; et
un moyen de génération de composante d'ondulation de tension continue, destiné à extraire une composante d'ondulation de la tension continue ($\Delta$ed), contenue dans la valeur de tension continue (ed) du circuit de lissage (4),
dans lequel le moyen de commande (5) calcule le produit d'un coefficient réglé en fonction de l'information d'état de charge et du courant d'entrée, et crée le signal de rapport cyclique (d) spécifiant le fonctionnement du découpeur amplificateur, sur la base du produit et de la composante d'ondulation de la tension continue ($\Delta$ed).

5. Circuit d'alimentation électrique selon la revendication 1, dans lequel le moyen de commande (5) comprend en outre :

un moyen de génération d'information de courant d'entrée (52, 53), destiné à détecter un courant d'entrée circulant dans le circuit redresseur (2) ;
un moyen de génération d'information d'état de charge (80), destiné à produire une information d'état de charge indiquant un état d'une charge connectée au circuit de lissage (4) ;
un premier moyen de production de signal de rapport cyclique, destiné à déterminer en tant que fonction une valeur fondée sur le produit d'un coefficient réglé en fonction de l'information d'état de charge et du courant d'entrée, comme étant un premier signal de rapport cyclique (d1) ;
un deuxième moyen de production de signal de rapport cyclique, destiné à délivrer en sortie la valeur constante préréglée, en tant que deuxième signal de rapport cyclique,
dans lequel le moyen de commande (5) utilise la composante d'ondulation de la tension continue ($\Delta$ed) et/ou l'information d'état de charge pour déterminer l'un des premier et deuxième signaux de rapport cyclique comme étant le signal de rapport cyclique (d).

6. Circuit d'alimentation électrique selon la revendication 5, dans lequel le premier signal de rapport cyclique (d1) est produit sur la base du produit et de la composante d'ondulation de la tension continue ($\Delta$ed).

7. Circuit d'alimentation électrique selon la revendication 5, dans lequel le moyen de commande (5) est doté en outre d'une fonction destinée à délivrer en sortie le deuxième signal de rapport cyclique, lorsque l'information d'état de charge est inférieure ou égale à une valeur prédéterminée, et à délivrer en sortie le premier signal de rapport cyclique, lorsque l'information d'état de charge est supérieure à la valeur prédéterminée.

8. Circuit d'alimentation électrique selon la revendication 1, dans lequel le moyen de commande (5) comprend en outre :

un moyen de génération d'information de courant d'entrée (52, 53), destiné à détecter un courant d'entrée circulant dans le circuit redresseur (2) ;
un moyen de génération d'information d'état de charge (80), destiné à produire une information d'état de charge pour indiquer un état d'une charge connectée au circuit de lissage ;
un moyen de génération de composante d'ondulation de tension continue, destiné à extraire une composante d'ondulation de la tension continue ($\Delta$ed), contenue dans la valeur de tension continue (ed) du circuit de lissage (4) ;
un premier moyen de production de signal de rapport cyclique, destiné à calculer en tant que fonction le produit d'un coefficient réglé en fonction de l'information d'état de charge et du courant d'entrée, et à déterminer le produit comme étant un premier signal de rapport cyclique (d1) ;
un deuxième moyen de production de signal de rapport cyclique, destiné à délivrer en sortie la valeur constante préréglée en tant que deuxième signal de rapport cyclique (d3) ;
un troisième moyen de production de signal de rapport cyclique, destiné à produire un troisième signal de rapport cyclique (d2), sur la base du produit et de la composante d'ondulation de la tension continue ($\Delta$ed) ; et
le moyen de modification de signal de rapport cyclique (508) est conçu pour délivrer en sortie l'un des premier, deuxième et troisième signaux de rapport cyclique, en tant que signal de rapport cyclique (d) spécifiant le fonctionnement du circuit découpeur amplificateur (3), en utilisant la composante d'ondulation de la tension continue (Δed) et/ou l'information d'état de charge.

9.  Circuit d'alimentation électrique selon la revendication 2, dans lequel la charge connectée au circuit de lissage (4) consiste en un moteur et un circuit inverseur destiné à commander le moteur ; l'information d'état de charge est une vitesse de rotation du moteur ; et le coefficient est réglé sur la base d'un produit de l'information d'état de charge et d'un rapport d'amplification.

10. Circuit d'alimentation électrique selon la revendication 1, dans lequel la composante d'ondulation de la tension continue inclut le produit d'une composante d'ondulation de la tension continue et d'un gain proportionnel de correction d'ondulation.

11. Circuit d'alimentation électrique selon la revendication 10, dans lequel le gain proportionnel de correction d'ondulation inclut une fonction destinée à modifier le gain proportionnel de correction d'ondulation en fonction de l'information d'état de charge.

# FIG. 1

EP 1 919 064 B1

FIG. 2

## FIG. 3A

JAPANESE PATENT NO. 2809463

## FIG. 3B

JAPANESE PATENT NO. 2809463
(HARMONIC CURRENT)

## FIG. 4A

FIRST EMBODIMENT

## FIG. 4B

FIRST EMBODIMENT
(HARMONIC CURRENT)

FIG. 5

# FIG. 6

**150**

**2 RECTIFIER CIRCUIT**

**8 INVERTER CIRCUIT**

**7 CONTROL CIRCUIT**

| INPUT CURRENT VALUE | DUTY RATIO SIGNAL | DC VOLTAGE VALUE | DC CURRENT DETECTION VALUE | PWM SIGNAL |
|---|---|---|---|---|

ROTATIONAL SPEED ESTIMATION MEANS

70 COMPUTING MEANS

80

EP 1 919 064 B1

# FIG. 7

# FIG. 8

7

POWER
SEMICONDUCTOR

## FIG. 9

50A

500

FILTER MEANS

Is

a

⊗

1

÷   Kp

5b

|is|

⊗

1

+   d1
−

502

FILTER MEANS

5c

+
−

Δed

Δed ≤ 0

Δed > 0

0

503

d

5a

BOOST RATIO STABILIZATION CONTROLLER

50C DC VOLTAGE RIPPLE CORRECTOR

# FIG. 10A

## CURRENT WAVEFORM

# FIG. 10B

## HARMONIC CURRENT

# FIG. 11

50A

BOOST RATIO STABILIZATION CONTROLLER

500 FILTER MEANS

5b

Is

1

|is|

1

a

Kp

Δed ≤ 0
or
Δed ≥ 5A

503

5a

d

Δed > 0& Is < 5A

502 FILTER MEANS

5c

Is

Δed

504 DETERMINATION MEANS

0

50D DC VOLTAGE RIPPLE CORRECTOR

50B

5c

Δed

501 FILTER MEANS

Ke

DC VOLTAGE RIPPLE CORRECTOR

EP 1 919 064 B1

# FIG. 12

DC VOLTAGE RIPPLE CORRECTOR

BOOST RATIO STABILIZATION CONTROLLER

50A

50C

502

5c

500 FILTER MEANS

5b

FILTER MEANS

1

Is

1

|is|

1

a

Kp

+

−

Δed

503 DUTY RATIO
MODIFICATION MEANS
505 SELECTION MEANS

Δed ≤ 0

0

Δed > 0

50B

5c

FILTER MEANS

Δed

501

Ke

+

−

DETERMINATION
MEANS

506

Is

d

5a

DC VOLTAGE RIPPLE CORRECTOR

FIG. 13

# FIG. 14

RIPPLE CORRECTION
PROPORTIONAL GAIN: Ke

INPUT CURRENT Is(EFFECTIVE VALUE)

## FIG. 15A

## FIG. 15B

## FIG. 15C

## FIG. 15D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI011989114372 B
- JP 2809463 B

- JP 2796340 B

### Non-patent literature cited in the description

- A new continuous conduction mode PFC IC with average current mode control. **JUNYANG LUO et al.** POWER ELECTRONIGS AND DRIVE SYSTEMS, 2003. PEDS 2003. THE FIFTH INTERN ATIONAL CONFERENGE ON SINGAPORE 17-20 NOV. 2003. IEEE, 17 November 2003, vol. 2

- Practical design issues for PFC circuits. **NOON J P et al.** APPLIED POWER ELECTRONICS CONFERENCE ANO EXPOSITION, 1997. APEC '97 CO NFERENCE PROCEEOINGS 1997., TWELFTH ANNUAL ATLANTA, GA, USA 23-27 FEB. 1997. IEEE, 23 February 1997, vol. 1, 51-58